# EUROPÄISCHE PATENTSCHRIFT

(11) **EP 2 343 328 B1**
(45) Veröffentlichungstag und Bekanntmachung des Hinweises auf die Patenterteilung: **16.08.2017**
(21) Anmeldenummer: 10195640.7
(22) Anmeldetag: 17.12.2010
(51) Int. Cl.: C08G 64/20, C08G 64/40, C23C 22/72, C08G 64/30

(54) **Verfahren und Vorrichtung zur Herstellung von Polycarbonat**
Method and device for producing polycarbonate
Procédé et dispositif destinés à la fabrication de polycarbonate

(30) Priorität: 22.12.2009 DE 102009059990
(43) Veröffentlichungstag der Anmeldung: 13.07.2011
(73) Patentinhaber: Covestro Deutschland AG, 51373 Leverkusen (DE)
(72) Erfinder: Doebert, Frank, 201107, MinHang District (CN); Stremmel, Andreas, 47447, Willich (DE); Biedron, Christoph, 47447, Moers (DE); Laue, Stephan, 2018, Antwerpen (BE); Rechner, Johann, 47906, Kerpen (DE); Hagen, Torsten, 45257, Essen (DE); Bruynseels, Frank, 9170, Sint Gillis (BE); Quaeyhaegens, Frank, 2900, Schoten (BE); Decloedt, Johan, 4562, AH Hulst (NL); Van Dorst, Paul, 2330, Merksplas (BE); Arndt, Uwe, 2180, Ekeren (BE); Vanden Eynde, Johan, 9052, Zwijnaarde (BE); Tracht, Ursula, 51379, Leverkusen (DE); König, Thomas, 51375, Leverkusen (DE); Liesenfelder, Ulrich, 51469, Bergisch Gladbach (DE)
(74) Vertreter: Levpat

(56) Entgegenhaltungen:
- EP-A1- 0 534 189
- EP-A1- 1 156 071
- JP-A- 6 329 784
- US-A- 3 404 122
- US-A1- 2008 210 343

## Beschreibung

Gegenstand der Erfindung ist ein Verfahren zur Vorbehandlung von Werkstoff-Oberflächen sowie die Verwendung dieser passivierten Materialien bei der Herstellung oder Verarbeitung von Polycarbonaten.

Durch dieses Verfahren gelingt es, die Wechselwirkung zwischen Polycarbonat und Metall zu minimieren und bei Verarbeitung und Synthese von Polycarbonat qualitativ hochwertiges Polymer, das insbesondere nicht verfärbt und frei von unlöslichen Bestandteilen ist, zu erhalten.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder deren Kombinationen erfolgen. Typische Materialien für diese Rührkessel oder Rohrreaktoren und Rohrleitungen etc. sind z. B. V4A-Stahl 1.4571 oder Hastelloy-C.

Die Wäsche der Polycarbonatlösung erfolgt durch Durchläufe durch Absetzkessel, Rührkessel, Coalescer oder Separatoren bzw. Kombinationen aus diesen Maßnahmen. Diese Anlagenteile bestehen ebenfalls aus den oben genannten Materialien.

Die Isolierung des Polymers aus der Lösung kann durch Verdampfen des Lösungsmittels mittels Temperatur, Vakuum oder eines erhitzten Schleppgases erfolgen. Andere Isolierungsmethoden sind Kristallisation und Fällung. Auch diese Verfahrensschritte werden in Behältnissen aus den oben genannten Medien durchgeführt. Bei einem thermischen Aufarbeitungsverfahren kommt infolge der höheren Temperatur dem verwendeten Material eine besondere Bedeutung zu. Ein solches thermisches Aufarbeitungsverfahren ist z. B. die Abdestillation des Lösungsmittels durch Überhitzung und Entspannung einem sogenannten "Flash-Verfahren" (siehe auch "Thermische Trennverfahren", VCH Verlagsanstalt 1988, S. 114). Alle diese Verfahren sind in der Patentliteratur und in Lehrbüchern beschrieben und dem Fachmann geläufig. Bei der Entfernung des Lösungsmittels durch Temperatur (Abdestillieren) oder dem technisch effektiveren Flash-Verfahren erhält man hochkonzentrierte Polymerschmelzen. Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207), entfernt werden. Auch hier kommt dem verwendeten Werkstoff, der mit der Polymerschmelze in Kontakt steht, eine besondere Rolle zu.

Das mit Hilfe dieses Verfahrens hergestellte Polycarbonat eignet sich vor allem für qualitativ hochwertige Spritzgussartikel, insbesondere solche in denen hohe Transparenz und niedriger YI (Yellowness Index) wichtig sind, wie z. B. optische Datenspeicher, Streuscheiben oder Scheiben für den Automobilbereich allgemein.

Es ist bekannt, dass während Verarbeitung und Synthese von Polycarbonat der Kontakt mit Werkstoffoberflächen insbesondere bei erhöhten Temperaturen, langen Verweilzeiten und Verwendung eisenhaltiger Werkstoffe eine Schädigung des Polycarbonats verursacht wird. Die Schädigung äußert sich in einer Verschlechterung der Farbe (Vergilbung) und der Bildung unlöslicher Anteile. Besonders deutlich tritt diese Schädigung beim Kontakt mit neuen Oberflächen nichtrostender Stähle auf, z.B. bei Anfahrvorgängen. Die Schädigung, insbesondere Vergilbung, von Polycarbonat in Gegenwart von Stahloberflächen bzw. Metall-Ionen ist umfassend vorbeschrieben, z.B. in EP0819717, EP0905184, EP0386616.

Der Stand der Technik umfasst verschiedene Ansätze, um diese Polycarbonat-Schädigung zu minimieren.

WO2002037148, EP1383821, EP0512223, EP1155737 und EP0635532 beschreiben den Einsatz hochwertiger Werkstoffe mit niedrigem Eisengehalt. Aufgrund der hohen Kosten für die Beschaffung und Verarbeitung besonders eisenarmer Legierungen ist der umfassende Einsatz solcher hochwertiger Werkstoffe keine wirtschaftlich sinnvolle Lösung. Die in EP1155737 angegebene Materialzusammensetzung mit Nickelgehalten von 5-15% und Chromgehalten von 10-20% ist zudem unter typischen Synthese- und Verarbeitungsbedingungen nicht ausreichend, um die Polycarbonat-Schädigung im angestrebten niedrigen Bereich zu halten.

EP0905184 beschreibt die Verwendung von Phosphitdiestern als stabilisierende Zusätze zum Polycarbonat, die die Wechselwirkung mit Metallionen unterdrücken. Die Zudosierung eines Stabilisators ist meistens aufgrund der Änderung der Produktzusammensetzung oder wegen eines Einflusses auf die Reaktion unerwünscht.

US20080154018, US20080210343, EP1156071, EP0819717 beschreiben Behandlungsmethoden, um metallische Werkstoffe gegenüber Polycarbonat inert zu machen. Die in US20080154018, US20080210343, EP1156071 und EP0819717 beschriebenen Methoden sind sehr aufwändig und das Resultat unzureichend. In EP1156071 und EP0819717 werden verschiedene Spülvorgänge mit thermischer Behandlung der Metalloberfläche kombiniert. US20080154018 und US20080210343 beschreiben thermische bzw. thermisch oxidative Behandlungsschritte. Zudem bestand die Aufgabe bei US20080154018 und US20020210343 darin, die Bildung von fluoreszierenden Partikeln zu verringern, während der Fachmann in diesen Offenlegungsschriften keinen Hinweis darauf findet, wie er Farbe und unlösliche Rückstände beeinflussen kann.

Der Einsatz von Phosphat zum Verbessern der Korrosionsbeständigkeit ist bekannt und beispielsweise in CH-580685, JP-81018675, DE-4129529, DE-19621184, US-6117251, C.A. Melendres et al., Electrochimica Acta 34 (1989) 281 beschrieben. In der Regel werden wässrige Phosphat- oder Phosphorsäure-Lösungen zur Behandlung der Metalloberflächen eingesetzt mit dem Ziel, die Beständigkeit der Metalloberfläche gegen Korrosion zu verbessern. Dass eine solche Behandlung der Oberflächen zu einer Verbesserten Polycarbonatqualität führen kann, wird allerdings nicht erwähnt.

Der Erfindung liegt daher die Aufgabe zugrunde, eine einfache Methode zur Vorbehandlung von Stahloberflächen zu entwickeln, die die Wechselwirkung der Metalloberfläche mit Polycarbonat minimiert und so die Schädigung reduziert bzw. möglichst unterbindet. Idealerweise sollte diese Methode zudem direkt im Betrieb auf existierende Apparate und Maschinen anwendbar sein, nicht nur während der Fertigung bzw. vor der Montage neuer Apparate.

Es wurde überraschend gefunden, dass der Kontakt von eisenhaltigen Metalloberflächen mit einer eine oder mehrere Phosphor-Verbindungen enthaltenden Polycarbonat-Schmelze zu einer Oberflächenveränderung führt, die die Schädigung von Polycarbonat beim anschließenden Einsatz der Metalloberflächen für die Produktion oder Verarbeitung so gut wie vollständig unterdrückt.

Die erfindungsgemäße Vorbehandlung ist anwendbar auf eisenhaltige Stähle wie zum Beispiel hochlegierte Chrom-Nickel-Edelstähle, besonders bevorzugt auf den nichtrostenden Stahl 1.4571 (X6CrNiMoTi 17-12-2, Ti-stabilisierter Chrom-Nickel-Stahl). Die Stahloberflächen werden dazu ohne zusätzliche Vorbehandlung und ohne nachgelagerte Spül- oder Reinigungsschritte in Kontakt mit der PC-Schmelze gebracht. Die Behandlung kann somit in-situ als Vorlauf zur eigentlichen Produktion oder Verarbeitung erfolgen. Die Vorbehandlung erfolg im Temperaturbereich von 300°C bis 380°C, besonders bevorzugt von 320 bis 350°C. Einwirkzeiten liegen von 6 bis 12 Stunden. Während der Einwirkzeit verbleibt die Schmelze im stationären Kontakt mit der Metalloberfläche. Die Behandlung kann sowohl an Luft als auch unter Inert-Atmosphäre durchgeführt werden. Als Phosphor-Verbindungen können wässrige Phosphorsäure sowie organische Phosphat- oder Phosphit-Verbindungen eingesetzt werden. Beispielsweise können folgende Trialkylphosphate, Triarylphosphate PO(OR)3 und Dialkylphosphate PO(OR)2OH sowie Phosphite P(OR)3 oder (RO)P(OR')OHverwendet werden:
Trimethylphosphat, Triethylphosphat, Tributylphosphat, Trioctylphosphat, Tris-(2-ethylhexyl)-phosphat, Trinonylphosphat, Tridecylphosphat Tris-(2-chloroethyl)phosphat, Tricyclohexylphosphat, Triphenylphosphat, Diethylphosphat, Dibutylphosphat, Dioctylphosphat, Diphenylphosphat, Trimethylphosphit, Triethylphosphit, Tributylphosphit, Trioctylphosphit, Triphenylphosphit, Dibutylphosphit, Diphenylphosphit.

Die Phosphor-Verbindung wird der Polycarbonat-Schmelze in Konzentrationen von 0,1g Phosphat pro m² Metalloberfläche bis 5000g pro m² Metalloberfläche zugesetzt. Bevorzugt werden von 1g pro m² bis 100g pro m² und besonders bevorzugt 5g pro m² bis 50g pro m² eingesetzt. Besonders bevorzugt werden bei kurzen Einwirkzeiten höhere Konzentrationen, bei langer Einwirkzeit niedrigere Konzentrationen verwendet. Die Phosphor-Verbindung wird als Reinstoff oder Lösung vor dem Aufschmelzen zum PC-Granulat zudosiert oder in die PC-Schmelze eingemischt.

Bei diesen Metalloberflächen kann es sich z. B. um gegebenenfalls geheizte Rohre zum Transport von Polycarbonatschmelzen, um Rohrbündel, bzw. die inneren Oberflächen von Wärmetauschern, um Reaktionskessel oder auch um Filtrationsapparaturen bzw. andere schmelzeführende Teile von Extrudern und Pumpen handeln. Die Herstellung von Polycarbonat erfolgt in aller Regel in Anlagenteilen, d. h. Rohren, Reaktionskesseln etc, aus Stahl bzw. aus speziellen Stahllegierungen. In diesen Anlagen wird das Polycarbonat hergestellt, gefördert, eingedampft, isoliert oder weiterverarbeitet.

In einer weiteren Ausgestaltung der Erfindung werden thermo-oxidativ bei Temperaturen von 400°C bis 500°C, bevorzugt von 440°C bis 460°C, an Luft oder einer Sauerstoff-enthaltenden Atmosphäre, vorbehandelte Metalloberflächen eingesetzt und mit Phosphit-haltiger PC-Schmelze im gleichen Temperatur- und Konzentrationsbereich wie für die Phosphat-haltige PC-Schmelze angegeben an Luft oder unter Inertgas vorbehandelt.

Alternativ zur beschriebenen in-situ Vorbehandlung mit statischer PC-Schmelze ist eine kontinuierliche Zufuhr von Phosphat-haltiger PC-Schmelze zur Metalloberfläche möglich. Dazu wird die zu behandelnde Oberfläche von Rohrleitungen, Kesseln, Apparaten oder Maschinen kontinuierlich über einen Zeitraum von 6 bis 12 Stunden, bevorzugt bei Temperaturen von 320°C bis 350°C, von der Phosphat-haltigen PC-Schmelze mit durchströmt.

Besonders bevorzugt wird das erfindungsgemäße Verfahren bei der Herstellung und der Verarbeitung, wie Compoundierung oder Spritzguss von Polycarbonat angewendet. Hierbei bietet es Vorteile vor allem bei der Farbe des Polycarbonats, bei nicht eingefärbtem Polycarbonat gemessen mit dem Yellowness Index (YI). Die erfindungsgemäßen Schneckenelemente werden hierbei besonders bevorzugt in der Entgasungszone eingesetzt.

Polycarbonate im Sinne der vorliegenden Erfindung sind sowohl Homopolycarbonate als auch Copolycarbonate; die Polycarbonate können in bekannter Weise linear oder verzweigt sein.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsumiert werden.

Das erfindungsgemäße Verfahren findet insbesondere bei der Herstellung von Polycarbonaten Verwendung. Gegenstand der vorliegenden Erfindung ist daher auch ein Verfahren zur Herstellung von Polycarbonaten, dadurch gekennzeichnet, das wenigstens ein Schritt des Herstellungsverfahrens ein erfindungsgemäßes Extrusionsverfahren umfasst.

Die Herstellung von Polycarbonaten unter Anwendung des erfindungsgemäßen Verfahrens erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Beispielhaft für die Herstellung von Polycarbonaten sei hier auf Schnell, "Chemistry and Physics of Polycarbonates", Polymer Reviews, Volume 9, Interscience Publishers, New York, London, Sydney 1964 verwiesen.

Die thermoplastischen Polycarbonate, die in dem erfindungsgemäßen Verfahren bevorzugt eingesetzt werden, einschließlich der thermoplastischen, aromatischen Polyestercarbonate haben ein mittleres Molekulargewicht M_{w} (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 15 000 bis 80 000 und insbesondere von 15 000 bis 60 000.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-p r o p an , Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate bei der Schmelzeumesterung sind solche der allgemeinen Formel (II) 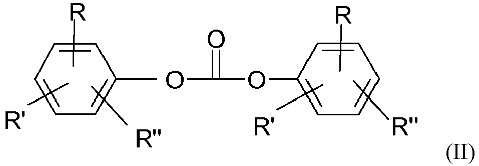 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenylphenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl) phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Die zur Regelung des Molekulargewichtes benötigten monofunktionellen Kettenabbrecher, wie beispielsweise Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2 , 4 , 6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Als Katalysatoren können im Schmelzumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (IV) 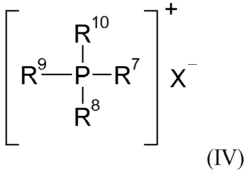 worin
- R⁷⁻¹⁰: für gleiche oder verschiedene gegebenenfalls substituierte C₁-C₁₀-Alkyl-, C₆-C₁₄-Aryl-, C₇-C₁₅-Arylalkyl- oder C₅-C₆-Cycloalkylreste, bevorzugt für Methyl oder C₆-C₁₄-Aryl, besonders bevorzugt Methyl oder Phenyl stehen und
- X⁻: für ein Anion ausgewählt aus der Gruppe Hydroxyd, Sulfat, Hydrogensulfat, Hydrogencarbonat, Carbonat, Halogenid, bevorzugt Chlorid, und Alkylat oder Arylat der Formel -OR¹¹ stehen, wobei R¹¹ für einen gegebenenfalls substituierten C₆-C₁₄-Aryl-, C₇-C₁₅-Arylalkyl- oder C₅-C₆-Cycloalkylrest, C₁-C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁-C₁₀-Alkoxyde und C₆-C₁₄-Aryloxyde von Lithium, Natrium und Kalium, vorzugsweise Hydroxyde, gegebenenfalls substituierte C₁-C₁₀-Alkoxyde oder C₆-C₁₄-Aryloxyde von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens im Grenzflächenverfahren kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und / oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (< 2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein *tert.* Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und / oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2 , 2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und / oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

**C₁-C₄-Alkyl** steht im Rahmen der Erfindung beispielsweise für Methyl, Ethyl, n-Propyl, iso-Propyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

### Beispiele

Die Vorbehandlung der metallischen Prüfkörper wird in nicht gerührten Batch-Reaktoren an Luft oder unter Argon durchgeführt. Als metallische Prüfkörper werden zum Beispiel Proben austenitischer (1.4571) oder martensitischer (1.4122) nichtrostender Stähle mit immer gleicher Oberflächenrauhigkeit eingestellt durch Schleifen mit gleicher Korngröße eingesetzt. Es findet keine zusätzliche Vorbehandlung der Prüfkörper statt. Die gewünschte Menge Phosphat, z.B. in Form wässriger Phosphorsäure oder als Organylphosphat, wird zum PC-Granulat bei Raumtemperatur (Makrolon® 2600, Bayer MaterialScience) zudosiert. Diese Mischung wird anschließend in Gegenwart des metallischen Prüfkörpers auf die Behandlungstemperatur aufgeheizt. Nach beendeter Einwirkzeit wird die Metallprobe durch Lösen in Methylenchlorid vollständig von der Polycarbonat-Schmelze befreit und anschließend ohne weitere Vorbehandlung im Testversuch eingesetzt. In einem kontinuierlichen Aufbau kann der Löse-Schritt nach der Phosphat-Behandlung entfallen und die phosphathaltige PC-Schmelze direkt mit dem eigentlichen Produkt ausgetrieben werden.

Um die schädigende Wirkung der vorbehandelten Metalloberflächen bei unterschiedlichen Temperaturen zu beurteilen, wurden die wie beschrieben vorbehandelten Prüfkörper bei zwei Temperatur- und Verweilzeit-Einstellungen getestet. Es wurden hierbei jeweils Temperversuche unter Inertbedingungen (Argon) bei 340°C (6h Verweilzeit) und 290°C (96h Verweilzeit) durchgeführt. Alle Beispiel-Versuche wurden mit Polycarbonat Makrolon® CD2005 (Bayer MaterialScience) aus derselben Partie durchgeführt.

Bewertungskriterien sind der Yellowness Index (YI, Bestimmung gemäß ASTM E313-00 (2000), Angaben jeweils für eine 4 mm dicke Farbmusterplatte) und die Masse des auf einer genormten Metalloberfläche gebildeten PC-Rückstands [mg/cm²], der nach 16 Stunden in Methylenchlorid bei Raumtemperatur unlöslich zurückbleibt.

### Referenzbeispiel 1

ohne Metallkontakt

### Vergleichsbespiel 2

1.4571 ohne Vorbehandlung

### Beispiel 3

Vorbehandlung von 1.4571 (X6CrNiMoTi 17-12-2) mit 21g pro m² PO₄³⁻ als H₃PO₄ in PC bei 340°C für 12 Stunden an Luft.

### Beispiel 4

Vorbehandlung von 1.4571 mit 20g pro m² PO₄³⁻ als Bu₂HPO₄ in PC bei 340°C für 6 Stunden an Luft.

### Beispiel 5

Vorbehandlung von 1.4571 mit 4g pro m² PO₄³⁻ als Tris-(2-ethylhexyl)phosphat in PC bei 340°C für 6 Stunden unter Argon.

### Beispiel 6

Vorbehandlung von 1.4571 mit 1300g pro m² PO₄³⁻ als Phosphorsäure-PC-Film bei 450°C für 4 Stunden an Luft.

### Vergleichsbeispiel 7

Vorbehandlung von 1.4571 bei 450°C für 4 Stunden an Luft.

### Beispiel 8

Vorbehandlung von 1.4571 zunächst bei 450°C für 4 Stunden an Luft, anschließend mit 17g pro m² PO₄³⁻ als Triphenylphosphit bei 340°C für 12 Stunden unter Argon.

### Vergleichsbeispiel 9

1.4122 ohne Vorbehandlung.

### Beispiel 10

Vorbehandlung von 1.4122 mit 24g pro m² PO₄³⁻ als H₃PO₄ in PC bei 340°C für 6 Stunden an Luft.

**Tabelle 1**

| | YI(340°C, 6h) | PC-Rückstand [mg/cm²] (340°C, 6h) | YI(290°C, 96h) | PC-Rückstand [mg/cm²] (290°C,96h) |
|---|---|---|---|---|
| 1^{#} | 7,2 | - | 7,9 | - |
| 2 | 35,8 | 1 | 47,0 | 26 |
| 3* | 6,5 | 0 | 7,8 | 0 |
| 4* | 4,4 | 0 | 12,7 | 0 |
| 5* | 12,1 | 0 | 13,3 | 0 |
| 6* | 8,1 | 0 | 5,0 | 0 |
| 7 | 31,0 | 10 | 54,9 | 7 |
| 8* | 8,2 | 0 | nicht gemessen | |
| 9 | 89,4 | 11 | nicht gemessen | |
| 10* | 14,8 | 0 | 21,0 | 1 |

| | | | | |
|---|---|---|---|---|
| *: erfindungsgemäße Beispiele #: Referenz PC ohne Metallkontakt -: nicht ermittelbar Beispiel 6 ist nicht erfindugsgemäß. | | | | |

## Patentansprüche

1. Verfahren zur Passivierung von Stahloberflächen von Vorrichtungen, die zur Herstellung oder zur Verarbeitung von Polycarbonaten verwendet werden, wobei wenigstens zum Teil in den Bereichen, die in Kontakt mit Reagenzien stehen, die Metalloberflächen mit einer Polycarbonat-Schmelze enthaltend eine oder mehrere Phosphor-Verbindungen, behandelt werden, **dadurch gekennzeichnet, dass** die Passivierung mit der Phosphor-Verbindungen-haltigen Polycarbonat-Schmelze bei einer Temperatur von 300 bis 380°C, mit einer Verweilzeit von 6 bis 12 Stunden erfolgt.

2. Verfahren nach Anspruch 1, **dadurch gekennzeichnet, dass** die Konzentration an Phosphor-Verbindung in der Polycarbonat-Schmelze von 0,1g Phosphat pro m² Metalloberfläche bis 5000g pro m² Metalloberfläche beträgt.

3. Verfahren nach einem der Anspruch 1 oder 2, **dadurch gekennzeichnet, dass** als Phosphor-Verbindungen Phosphorsäure oder Phosphorsäurederivate oder organische Phosphatverbindungen verwendet werden.

4. Verfahren nach einem der Anspruch 1 oder 2, **dadurch gekennzeichnet, dass** die Phosphor-Verbindung ein Phosphit oder ein Phosphat ist.

5. Verfahren nach einem der Ansprüche 1 bis 4, **dadurch gekennzeichnet, dass** die Passivierung in Gegenwart von einem sauerstoffhaltigen Gas oder unter Inertgas erfolgt.

6. Verfahren nach einem der Ansprüche 1 bis 5, **dadurch gekennzeichnet, dass** die Metalloberflächen vor der Behandlung mir der Phosphor-Verbindungen enthaltenden Polycarbonat-Schmelze in oxidativer Atmosphäre thermisch vorbehandelt werden.

7. Vorrichtung zur Herstellung oder zur Verarbeitung von Polycarbonat, **dadurch gekennzeichnet, dass** die Metalloberflächen, die bei der Herstellung oder der Verarbeitung von Polycarbonaten verwendet werden, wenigstens zum Teil in den Bereichen, die in Kontakt mit Reagenzien stehen durch ein Passivierungsverfahren nach einem der Ansprüche 1 bis 6 behandelt wurden.

8. Verwendung einer Vorrichtung nach Anspruch 7, **dadurch gekennzeichnet, dass** sie zur Herstellung oder zur Verarbeitung von Polycarbonat verwendet wird.

9. Verfahren zur Herstellung von Polycarbonat, **dadurch gekennzeichnet, dass** das Polycarbonat durch Schmelzpolykondensation eines Bisphenols mit einem Carbonatdiester in einer Vorrichtung gemäß Anspruch 8 erhalten wird.

10. Verfahren zur Herstellung von Polycarbonat nach Anspruch 9, worin das Bisphenol Bisphenol A ist.

## Claims

1. Process for the passivation of steel surfaces of apparatuses which are used for the preparation or the processing of polycarbonates, wherein, at least partly in the regions which are in contact with reagents, the metal surfaces are treated with a polycarbonate melt containing one or more phosphorus compounds, **characterized in that** the passivation is effected with the polycarbonate melt containing phosphorus compounds at a temperature of 300 to 380°C, with a residence time of 6 to 12 hours.

2. Process according to Claim 1, **characterized in that** the concentration of phosphorus compound in the polycarbonate melt is from 0.1 g of phosphate per m² of metal surface to 5000 g per m² of metal surface.

3. Process according to either of Claims 1 and 2, **characterized in that** the phosphorus compounds used are phosphoric acid or phosphoric acid derivatives or organic phosphate compounds.

4. Process according to either of Claims 1 and 2, **characterized in that** the phosphorus compound is a phosphite or a phosphate.

5. Process according to any of Claims 1 to 4, **characterized in that** the passivation is effected in the presence of an oxygen-containing gas or under inert gas.

6. Process according to any of Claims 1 to 5, **characterized in that** the metal surfaces are thermally pretreated in an oxidizing atmosphere before the treatment with the polycarbonate melt containing phosphorus compounds.

7. Apparatus for the preparation or the processing of polycarbonate, **characterized in that** the metal surfaces which are used in the preparation or the processing of polycarbonates were treated at least partly in the regions which are in contact with reagents by a passivation process according to any of Claims 1 to 6.

8. Use of an apparatus according to Claim 7, **characterized in that** it is used for the preparation or the processing of polycarbonate.

9. Process for the preparation of polycarbonate, **characterized in that** the polycarbonate is obtained by melt polycondensation of a bisphenol with a carbonate diester in an apparatus according to Claim 8.

10. Process for the preparation of polycarbonate according to Claim 9, in which the bisphenol is bisphenol A.

## Revendications

1. Procédé de passivation de surfaces en acier de dispositifs, qui sont utilisés pour la fabrication ou pour le traitement de polycarbonates, les surfaces métalliques étant traitées au moins en partie dans les zones qui sont en contact avec des réactifs avec une masse fondue de polycarbonate contenant un ou plusieurs composés de phosphore, **caractérisé en ce que** la passivation avec la masse fondue de polycarbonate contenant des composés de phosphore a lieu à une température de 300 à 380 °C, avec un temps de séjour de 6 à 12 heures.

2. Procédé selon la revendication 1, **caractérisé en ce que** la concentration en composé de phosphore dans la masse fondue de polycarbonate est de 0,1 g de phosphate par m² de surface métallique à 5 000 g par m² de surface métallique.

3. Procédé selon l'une quelconque des revendications 1 ou 2, **caractérisé en ce que** de l'acide phosphorique ou des dérivés de l'acide phosphorique ou des composés de phosphate organiques sont utilisés en tant que composés de phosphore.

4. Procédé selon l'une quelconque des revendications 1 ou 2, **caractérisé en ce que** le composé de phosphore est un phosphite ou un phosphate.

5. Procédé selon l'une quelconque des revendications 1 à 4, **caractérisé en ce que** la passivation a lieu en présence d'un gaz contenant de l'oxygène ou sous un gaz inerte.

6. Procédé selon l'une quelconque des revendications 1 à 5, **caractérisé en ce que** les surfaces métalliques sont prétraitées thermiquement dans une atmosphère oxydative avant le traitement avec la masse fondue de polycarbonate contenant des composés de phosphore.

7. Dispositif pour la fabrication ou pour le traitement de polycarbonate, **caractérisé en ce que** les surfaces métalliques qui sont utilisées lors de la fabrication ou du traitement de polycarbonates ont été traitées au moins en partie dans les zones qui sont en contact avec des réactifs par un procédé de passivation selon l'une quelconque des revendications 1 à 6.

8. Utilisation d'un dispositif selon la revendication 7, **caractérisée en ce qu'**il est utilisé pour la fabrication ou pour le traitement de polycarbonate.

9. Procédé de fabrication de polycarbonate, **caractérisé en ce que** le polycarbonate est obtenu par polycondensation à l'état fondu d'un bisphénol avec un diester de carbonate dans un dispositif selon la revendication 8.

10. Procédé de fabrication de polycarbonate selon la revendication 9, dans lequel le bisphénol est le bisphénol A.
